# EUROPEAN PATENT SPECIFICATION

(11) **EP 1 023 504 B1**
(45) Date of publication and mention of the grant of the patent: **13.06.2001**
(21) Application number: 97911437.8
(22) Date of filing: 28.10.1997
(51) Int. Cl.: E01C 7/35, E01C 19/17, C04B 18/14, C04B 14/36

(54) **METHOD AND COMPOSITION FOR ROUGHENING THE ROAD SURFACE**
VERFAHREN UND ZUSAMMENSETZUNG ZUM ERHÖHEN DER OBERFLÄCHENRAUHIGKEIT VON FAHRBAHNDECKEN
PROCEDE ET COMPOSITION PERMETTANT DE RENDRE RUGUEUX UN REVETEMENT ROUTIER

(30) Priority: 13.10.1997 IT DA970181 U
(43) Date of publication of application: 02.08.2000
(73) Proprietor: Italgrip S.R.L., 34132 Trieste (IT)
(72) Inventor: SPINOGLIO, Silvio, I-34132 Trieste (IT)
(74) Representative: D'Agostini, Giovanni, Dr.
(86) International application number: IT9700266
(87) International publication number: WO9919566

(56) References cited:
- EP-A- 0 034 296
- DE-A- 1 794 200
- GB-A- 1 390 914
- US-A- 3 771 893
- US-A- 3 785 842

## Description

### Technical Field

This invention has for object a composition for the superficial roughening of road pavings, method and machine for the respective laying.

Also the improved carpet obtained by such method, is integrate part of this invention.

### Background Art

The new pavings in bituminous conglomerate have substantially a transversal friction coefficient (C.A.T.), measured on a wet surface, that on average is equal to 65.

This friction coefficient is not sufficient to ensure adequate safety particularly at high speeds.

All this is worsened by the rapid wear of the road carpet that becomes slippery in a short time, reducing such coefficient.

As a consequence, in the road sections with curves having a reduced radius of curvature, turn-off, gradient sections, crossings, entry and exit from tunnels, viaducts, etc., it is advised to subject the road carpet to a particular coating process to increase the value of the paving roughness, or to increase the value of the transversal friction coefficient.

The technologies presently used to satisfy this need generally consist in the laying, usually by jetting, on the paving, of a binder material layer and in its fast shotblasting with grit sizes comprised between 1 and 4 mm.

After the removal of the exceeding grit, that is of that grit which is not bound by the binding material layer, the road paving may be normally run after about 2 - 5 hours.

The binding material is generally made up of bitumen modified with elastomers, otherwise tar plasticised resins or also pure epoxy resins are used. Being required to the binding material an extreme and durable adhesion to the underlying conglomerate and to the covering grits, the more reliable binding materials, particularly used on highways where there are intense traffic flows, are made up of materials based on pure epoxy resins.

Because the epoxy polymers are bicomponents, for the spreading must be used sophisticated technologies, which ensure an even and continuous spreading.

The grits usually utilized for the most important laying are the bauxite subjected to calcination, that is to a process that eliminates its volatile substances.
- US 3 785 842 A (RANSOME) 15 January 1974 discloses a method of producing a synthetic aggregate comprising preparing a finely divided raw material having an oxide analysis SiO₂ 5-35 percent, AL₂O₃ 15-70 percent, FeO 0-65 percent, MgO 0-50 percent, alkalis <5 percent and CaO<5 percent, the combined content of FeO and MgO being sufficient to provide at least 15% of spinels in the finished aggregate, agglomerating the raw material, and firing the agglomerated material at a temperature causing recrystallization of the raw materials until substantial elimination of any uncombined magnesium oxide is achieved and a material is produced comprising spinel crystals imbebbed in a matrix of alumino-silicates, silicates, or a mixture thereof, and having a porosity low enough to provide an aggregate abrasion value less than 20 percent.
- EP 034 296 A (DUNLOP) 26 August 1981 discloses a method and apparatus suitable for treating a surface of a road, which comprises at least one aggregate in a binder matrix, wherein each aggregate is covered on the top of fine abrasive particles.

### Drawbacks of the prior art

The technologies disclosed and in use for carrying out the surface roughening of road carpets present some problems.

In particular, the use of a natural substance such as bauxite (AL₂O₃), as an aggregate in grit that has the drawback of a reduced evenness of the characteristics of the material, such as for example the hardness, the polyhedral shape of the granules, as well as the porosity.

These parameters can vary because of the difference of escavation strata in the same quarry, the bauxite originated from different quarries, etc.

Besides this there are difficulties in standardizing and in repeating the roughening, that is different results are found, even if using the same materials.

### Purpose of the present invention

Purpose of the present invention is that of solving the above mentioned problems, allowing to obtain a surface roughening of road pavings having a high performance efficiency and a better life and stability of the chemical-physical and performance characteristics of the materials used.

A further purpose is that of ensuring a possibility of repeating the global roughening characteristics when the modalities of laying and of the materials used are the same.

A further purpose is that of supplying a perfect adhesion of the aggregate material to the binding material, in order to ensure a high duration of the roughening also in road pavings with very intense traffic.

The above explained task, as well as the mentioned purposes and other ones, that eventually, will be better enhanced later, are achieved as claimed by means of a granular material to be laid as non-skid material by means of a binder (2) on the road surface, wherein:
- said aggregate material in granules is artificially produced;
- it includes spinel in a matrix composed of a piroxene group and forsterite or olivine;
characterised in that:
- it further includes spinel, magnesium chromate and iron, and wherein the presence of A1203 for a value included between 5% and 20%, preferably about 10/11% is provided;
- its granules are polygon shaped with sharp corners.

### Advantages of the innovation

In this way it is obtained a road carpet having the maximum effectiveness and performance both as coefficient of friction, and as life time of said friction coefficient, but even more in particular a maximum and absolute evenness of the friction coefficient on all the coated road surface without unevenness of the friction coefficient that otherwise would occur if the aggregate granulated material had not such qualitative stability.

Advantageously said granules are mainly cube-shaped and have a rough surface.

In this way the surface friction coefficient is absolutely kept constant in any area of the surface by improving the performance of the road carpet, being known that a more adherent surface section when it is adjacent to a less adherent surface section can deviate a braking vehicle.

The roughness of the grains additionally improves the friction coefficient.

Advantageously said binding resin is a bicomponent based on epoxy resins.

The maximum prill adherence is thus obtained.

As much advantageously said prill has the following composition:
SiO 40%, A1203 11%, MgO 40%, CaO 2%, Cr2O3 4%, Fe 1%

Further characteristics and advantages of the invention, will be better explained with the aid of the description of preferred form of embodiment, with the aid of the included drawings.

### Description

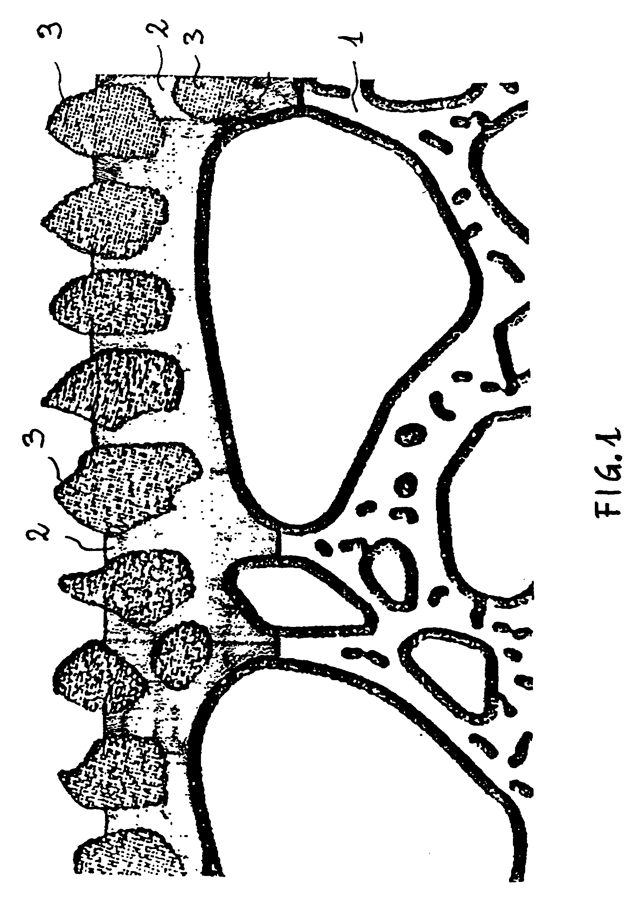

Figure 1 shows schematically, in a partially section perspective view, a road paving section roughened by the method according to the invention.

Figures 2,3,4,5,6 show the diagrams with section through the quaternary system SiO2 - CaO - MgO - Al2O3, respectively with alumina quantities (A1203) of 5% (Fig.2); 10% (Fig.3); 15% (Fig.4) and 20% (Fig.5).

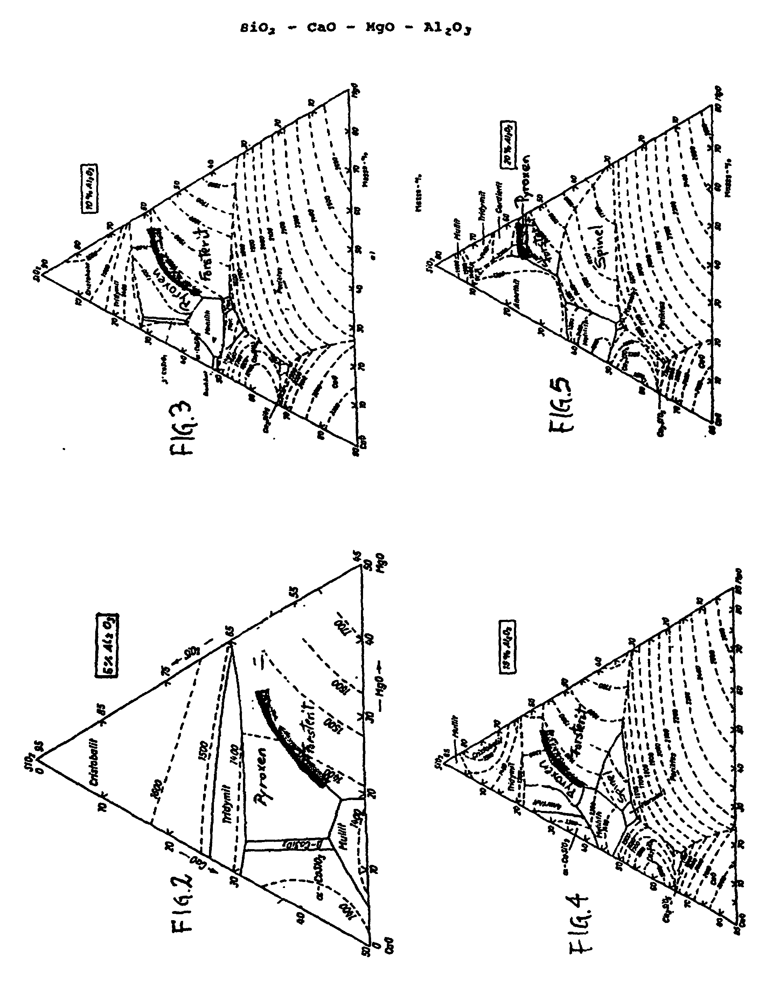

The optimal solution, as claimed, being about the Alumina composition at 10% - Fig.3.

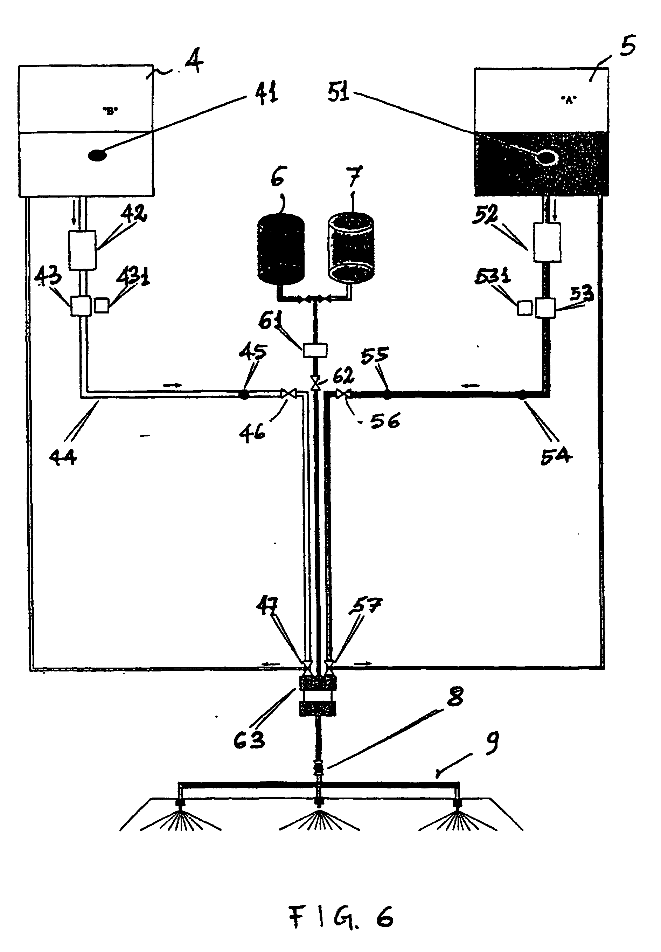

Figure 6 shows the block scheme of the preferential system for the distribution of the binding resin obviously mounted on jetting vehicle of the roadbed.

It is anyway normal that at first a suitable cleaning will be carried out as in the known laying art.

For what concerns the material of the present invention, in order to obtain a porous material and in a dead heat highly resistant to crushing and abrasion, the influences of the single mineralogical components were studied.

### Tests and characteristics of the mineralogical components

The tests of the mineralogical components gave the results shown in figures from 2 to 5.

From tests and studies it was found that the Spinel formation in the melting product is fundamental.

This is found in grains developed idiomorphically between the edges of the Piroxene.

In the phase diagrams as in figures from 3 to 5 the Spinel appears just at about 15% Al2O3, where it is stable at 1550°C, then it still exists during the reaching of the liquefaction temperature of the basic product.

In these idiomorphic grains this regards therefore a Primary spinel.

In fact the Spinel crystals can have a different form of development and can look like dendrites. The dendrites grow for example in strongly sub-cooled metals while the branches of the dendrites grow in that direction in which the fastest crystallization is possible.

By a crystallographic point also a further phase could be interesting.

According to evaluations this phase could bring the crystal shape through a growth of the skeleton during which the growing surfaces are formed incomplete of edges and angles.

This means that the crystallization and the material inflow are not in equilibrium and therefore energetically the positions of more favourable constructions are preferred.

As such formations in the tests are always found inside a brown glass matrix this would mean similarly the cooling effects.

Also a metasomatic transformation of the glass phase (with a renewal of the zeolite) with a long ageing could be expected.

It results anyway from the analysis that the crushed stone grains can be substantially formed by two ores, Piroxene and Olivine.

The grain substantially consists of Olivine and Magnetite.

These grains could be the first distillation products of the melted mass.

In the Spinel tests grains with a considerable porosity are found.

Such grains produce their effects greatly weakening the strength and in relation with the ratio of their presence the strength of all the grains mixture.

The ores content of these samples has been determined with weight 4,2% of magnetite, crushed stone grains (magnetite+chromite) separable.

It was said also as claimed that the optimal composition of said prill is the following:
SiO2 40%, A1203 11%, MgO 40%, CaO 2%, Cr203 4%, Fe 1%;

As seen the formulation according to the ternary diagram of Fig. 3 is the one closer to the optimal characteristics.

The grey fields on the inside indicate the intervals of the product solidification.

The crystallographic analysis has confirmed the presence of Spinel crystals in a matrix composed of a Piroxene Group and Phosphate Rock. Because it probably was a primary Spinel.

The crushes stone grains are substantially formed by two prevailing ores: Piroxene and Olivine, that represent the first distillation products of the melt mass with a considerable porosity.

The technical characteristics resulted were the following:
Density at 20°C g/cm³ = 2,90 - 3,10
pH = 9,8
Friction resistance 60
Water absorption after 3 days = 0,03
Mainly cubic shape of the grains
Affinity with the bitumen = optimal equal to limestone.

### Additional data

The aggregate material is made up of a material, commercially known with the trade-mark MC-1, that is made up of a forsterite mixture (olivine), spinel, magnesium chromate (magnesite) and iron in the indicated and claimed parameters.

Such aggregate material has a high porosity, in order to ensure a great contact surface with the binding material.

Additionally, the same aggregate material has a high hardness, intended as crushing resistance and a non- smoothness, as well as a high abrasion resistance.

Such material has, additionally, a high acoustic insulation, deriving from the granules intrinsic porosity and an even colour.

In particular, because the aggregate material is artificially produced, it is found, in such material, a perfect stability of the mineralogical and chemical-physical characteristics that a natural grit could not ensure.

The above mentioned aggregate material, that can be placed in the area of the piroxene group and of the forsterites structurally has a morphology and a texture that resembles natural rock of the basic magnetites type with, additionally, pores size and distribution that exclude a capillary water absorption.

In all components the surface angularity and roughness stand out.

When observed with the naked eye, the differences respect to a magmatic rock having a low tufaceous presence are limited, except for a slightly higher chromatic variation .

The boiling test of such aggregate materials has not shown any tendency to disaggregation.

At the microscope test the presence of free lime or magnesium (CaO or MgO) inclusions or of other components with tendency to the swelling was not noticed.

The aforementioned aggregate materials have, consequently, a high volumetric stability.

### Tests and characteristics of the binding material

The optimal binding material has been identified as a bicomponent epoxy resin "RTC" ("A:B" )=2:1 with suitable formula of the hardener (B) for giving to the final product the characteristic of a liquid without solid charges (= without filler or quartz), low viscosity, average reactivity, high wettability:
Specific weight Kg/dmc about. 1,12
Polymeric content on the total % 100
Stoichiometric ratio on the total (A:B)= 100: 50
Colourless
Pot life at 23(+/-) 2°C = 14-18 minutes
Hardening time in film at 23(+/-) 2°C, start minutes 100-110.
Linear thermal expansion coefficient °C-1 = about. 10,5x10⁻⁵
Compression breaking unitary load Mpa >/= 60
Module E Mpa >/= 6,000
Bending breaking unitary load Mpa >/= 32
Cutting breaking unitary load Mpa >/= 30
Traction breaking unitary load Mpa >/= 25
Breaking elongation % >/= 15
Adhesion on cls (tearing test adhesion) Mpa about. 3
Type of breakage 100% cohesion cls.

### Laying process

The laying process provides as said, to carry out the laying, on the road paving 1 to be roughened, of a binding material layer 2, that is made up of a bicomponent polymer and preferably of a bicomponent epoxy resin .

Immediately after the laying of the binding material layer 2, it is carried out the laying, on such binding material layer, of an aggregate material layer 3, in granules, artificially produced for the construction of road carpets with better characteristics as said and claimed .

Substantially the phases are the following:
- preparation of the bottom, consisting in removing the surface signalization and in a cleaning from oils, naphtha, hydrocarbons and dust by means of the prior art;
- laying of the binder by using a prearranged movable equipment according to the characteristics of Fig.6, by low pressure airless jetting means with fan 95°, in order to lay constantly about. 0,9 / 1,5 Kg per m² of binding product, according to the finishing degree of the bituminous conglomerate (open / closed);
- saturation with grit having the claimed characteristics (laying of the grit on the binding product), whose granulometry of the monogranulated type is chosen in relation to the paving finishing degree, but also of the road section typology;
- suction of the exceeding grit, carried out after 5/6 hours from its laying, obviously depending on road carpet temperature and specifical characteristics of binding material and hardening component.

The binding film thickness will be preferably from 0,5 to 1,5 mm.

The laying temperature goes from 30 to 60° C.

### Machine for the preparation and cleaning of the roadbed

This machine can be any of the cleaning machines for the roadbed preparation, which provide brushing means with eventual solvent and drying means, air-jet means not excluded both for drying eventual humidity and for removing any surface dust.

### Machine for the binder laying

The machine for the laying includes a movable means made up of tanks for product heating, stirrers and computerised control of the recycled and sprayed product quantities +/ 5%.

As the binding film thicknesses must be from 0,5 to 1,5 mm, the advancing speed will be calculated in proportion to the quantity of delivering.

According to Figure 6 it is noticed that the machine includes two tanks of the bicomponent 4,5, both with a level meter 41,51 which convey respectively by heating means 42, 52 and pump 43, 53 operated by respective motors 431, 531, with temperature meter 44, 54 and flow-meters 45, 55 and nonreturn valves 46, 56 and recirculation electro-valves 47, 57, the two components "A, B" to a mixer 63, to which two solvents 6,7 are also simultaneously conveyed, by a common pump 61, and a nonreturn valve 62.

The mixer 63 having mixed in exact proportions the components 4-A, 5-B and solvents 6-7, by jetting electro-valve 8 sends the heated mixture on the surface of the road carpet by the jetting apparatus 9.

### Machine for the grit application

This also movable machine or train can be anyone of the prior art, both with scattered laying by a doser, and also with jet deliverer.

### Machine for removing the exceeding unbound grit

This also movable machine or train can be anyone of the prior art, by brushes and suitable suction systems.

### Tests and analysis of the laying characteristics

The affinity with the binders has been noticed by comparing it with that of a compact limestone, whose affinity is considered excellent on the basis of the theoretic and practical experiences.

The test duration, normally fixed in 24 hours, has been increased up to 96 hours, allowing to check in the aggregates in object characteristics practically analogue to the limestone ones.

The amount of faulty grains has been equal to about 10%, in the sizes > 4.

From what previously described, it is clear that the invention fully reaches its purposes.

In particular, it must be pointed out that the use of an artificially produced aggregate material, of the above mentioned type, allows to obtain a fully satisfactory transversal friction coefficient, as well as a high duration in time of such transversal friction coefficient and a constant roughening behaviour in the different zones that make it up.

Advantageously the granular material is obtained by:
- chromate melting (chromium ore);
- substantial chromium elimination;
- fast cooling in water for obtaining said crystallized granules.

## Claims

1. A granular material to be laid as non-skid material by means of a binder (2) on the road surface, wherein:
• said granular material is artificially produced;
• it includes spinel in a matrix composed of a piroxene group and forsterite or olivine,
characterised in that:
• it further includes spinel, magnesium chromate and iron, and wherein the presence of A1203 for a value included between 5% and 20%, preferably about 10/11% is provided.
• its granules are polygon shaped with sharp corners.

2. A granular material to be laid as non-skid material by means of a binder (2) on the road surface, according to claim 1, characterised in that it contains:
SiO2 40%, A1203 11%, MgO 40%, CaO 2%, Cr203 4%, Fe 1%
with an oscillation ratio of the % of more or less the 30% for each of the respective components.

3. A granular material to be laid as non-skid material by means of a binder (2) on the road surface according to claim 1, characterised in that its granules have a cubiform shape.

4. A granular material to be laid as non-skid material by means of a binder (2) on the road surface according to previous claims, characterised in that:
• it is a product derived from the melting of a chromium ore, in particular chromite,
• the chromium is substantially extracted from the melted mass;
• the melted mass is rapidly solidified by casting in water for obtaining a loose crystallized material in granules.

5. A mix of binding material (2) and granular material to be laid as non-skid material on the road surface, wherein said granular material has the characteristics of the previous claims, characterised in that said binding material is a bicomponent epoxy resin to be laid with a laying temperature that goes substantially from 30 to 60° C. and with a binding film thickness substantially between 0,5 to 1,5 mm.

6. A machine for the distribution of the mix of previous claims on the road surface, characterised in that it includes two tanks to supply said bicomponent binding material (4,5), one for one component and one for the other, both with level meter (41,51) that convey respectively by heating means (42, 52) and pump (43, 53) operated by respective motors (431, 531), with temperature measurer (44, 54) and flow-meters (45, 55) and non return valves (46, 56) and recirculation electro-valves (47, 57), the two components "A, B" to a mixer (63), to which two solvents are also simultaneously conveyed (6,7), by a common pump (61), and nonreturn valve (62);
and in which said mixer (63) having mixed the components (4-A, 5-B) and the solvents (6-7) in exact proportions, by a jetting electro-valve (8) sends the heated mixture on the surface of the road carpet by the jetting apparatus (9).

## Patentansprüche

1. Ein Granulat zum Aufbringen als gleitsicheres Material mittels eines Bindemittels (2) auf der Fahrbahndecke, wobei:
• besagtes Granulat künstlich erzeugt wird;
• es Spinell in einer Matrize umfasst, bestehend aus einer *Piroxen*gruppe und *Forsterit* oder Olivin,
gekennzeichnet dadurch, dass:
• es des weiteren Spinell, Magnesiumchromat und Eisen umfasst, wobei A1203 in einem Anteil zwischen 5% und 20%, vorzugsweise etwa 10/11%, vorgesehen ist.
• seine Körnchen sind vieleckig mit scharfen Ecken.

2. Ein Granulat zum Aufbringen als gleitsicheres Material mittels eines Bindemittels (2) auf der Fahrbahndecke nach Anspruch 1, gekennzeichnet dadurch, dass es enthält:
SiO2 40%, Al203 11%, *MgO* 40%, *CaO* 2%, Cr2O3 4%, Fe 1%
mit einem Scwankungsbereich von mehr oder weniger 30% für jedes der betreffenden Bestandteile.

3. Ein Granulat zum Aufbringen als gleitsicheres Material mittels eines Bindemittels (2) auf der Fahrbahndecke nach Anspruch 1, gekennzeichnet dadurch, dass seine Körnchen eine würfelförmige Form haben.

4. Ein Granulat zum Aufbringen als gleitsicheres Material mittels eines Bindemittels (2) auf der Fahrbahndecke nach den vorherigen Ansprüchen, gekennzeichnet dadurch, dass:
• es ein Produkt ist, das durch Schmelzen eines Chromerzes entsteht, insbesondere Chromit,
• das Chrom im wesentlichen aus der geschmolzenen Masse herausgezogen wird;
• die geschmolzene Masse schnell durch Giessen in Wasser zum Erstarren gebracht wird, um ein loses kristallisiertes Material in Körnchen zu erhalten.

5. Eine Mischung von Bindematerial (2) und Granulat zum Aufbringen als gleitsicheres Material auf der Fahrbahndecke, wobei besagtes Granulat die Merkmale der vorherigen Patentansprüche hat, gekennzeichnet dadurch, dass besagte Bindematerial ein Bikomponentenepoxyharz mit einer Aufbringungstemperatur im wesentlichen von 30 bis 60° C ist. und mit einer Bindefilmdicke im wesentlichen zwischen 0,5 und 1,5 mm.

6. Eine Maschine für die Verteilung der Mischung der vorherigen Patentansprüche auf der Fahrbahndecke, gekennzeichnet dadurch, dass sie zwei Tanks umfasst, um besagtes Bikomponenten-Bindematerial zu liefern, (4,5), einen für eine Komponente und einen für die andere, beide mit Standanzeige (41,51), die durch Heizmittel (42, 52) und Pumpe (43, 53), von Motoren (431, 531) betrieben, mit Temperaturmesser (44, 54) und Strömungsmessern (45, 55) und Rückschlagventilen (46, 56) und Umlauf-Elektroventilen (47, 57), die beiden Komponenten "A, B" zu einem Mischer (63) befördern, zu denen auch gleichzeitig zwei Lösungsmittel (6,7) befördert werden, durch eine gemeinsame Pumpe (61), und Rückschlagventil (62); und bei der besagter Mischer (63) nach Mischen der Komponenten (4-A, 5-B) und der Lösungsmittel (6-7) in genauen Anteilen durch ein auswerfendes Elektroventil (8) die erwärmte Mischung auf die Straßenoberfläche durch die auswerfende Vorrichtung (9) aufbringt.

## Revendications

1. Matériel granulaire pour être préparé comme matériel antidérapant moyennant un relieur (2) sur la surface de route, dans lequel :
• Ledit matériel granulaire est produit artificiellement ;
• Il inclut un spinelle dans une matrice composée par un groupe pyroxène e t forstérite ou olivine, caractérisé en ce que:
• En outre du spinelle, il inclut du chromate de magnésium et du fer, dans lequel est pourvue la présence d'Al203, pour une valeur entre 5 et 20%, de préférence d'environs 10/11%.
• Ses granules sont du polygone formé avec des côtés tranchants.

2. Matériel granulaire pour être préparé comme matériel antidérapant moyennant un relieur (2) sur la surface de la route, selon la revendication 1, caractérisé en ce qu'il contient:
SiO2 40%, A1203 11%, MgO 40%, CaO 2%, Cr2O3 4%, Fe 1%
avec un rapport d'oscillation avec un % d'environs un 30% pour chacun des constituants.

3. Matériel granulaire pour être préparé comme matériel antidérapant moyennant un relieur (2) sur la surface de la route selon la revendication 1, caractérisé en ce que ses granules ont une forme en cube.

4. Matériel granulaire pour être préparé comme matériel antidérapant moyennant un relieur (2) sur la surface de la route selon les revendications précédentes, caractérisé en ce que :
• Il s'agit d'un produit dérivé de la fusion d'un minerai de chrome, en particulier de la chromite,
• Le chrome est principalement extrait de la masse fusionnée ;
• La masse fusionnée est rapidement solidifiée en l'introduisant dans l'eau pour obtenir un matériel libre cristallisé en granules.

5. Mélange de liant (2) et de matériel granulaire pour être préparé comme matériel antidérapant sur la surface de la route, où ledit matériel granulaire a les caractéristiques décrites aux revendications antérieures, caractérisé en ce que ledit liant est une résine époxy à deux composants pour être préparée à une température de pose substantiellement entre 30 à 60° C. et avec une épaisseur de film d'union substantiellement entre 0,5 et 1,5 mm.

6. Machine pour la distribution du mélange selon les revendications précédentes sur la surface de la route, caractérisée en ce qu'elle inclue deux réservoirs, un pour chaque composant, pour fournir ledit liant à deux composants (4,5), les deux avec limnimètre (41,51). Lesdits réservoirs conduisant les deux constituants "A, B" respectivement, grâce à des moyens de chauffage (42, 52) et à une pompe (43, 53) opérés par des moteurs respectifs (431, 531) avec thermostat (44, 54), debimètres (45, 55), valves de non retour (46, 56) et électrovalves de reprise (47, 57) jusqu'à un malaxeur (63) dans lequel deux solvants sont également transportés de forme simultanée (6,7) p a r une pompe commune (61) et une valve de non retour (62); et où ledit malaxeur (63) ayant mélangé les constituants (4-A, 5-B) et les solvants (6-7) dans des proportions exactes grâce à une électrovalve d'injection (8) envoi le mélange chauffé sur la surface de la route à travers un appareil d'injection (9).
